# EUROPEAN PATENT APPLICATION

(11) **EP 2 763 010 A1**
(43) Date of publication of application: **06.08.2014**
(21) Application number: 12835441.2
(22) Date of filing: 18.09.2012
(51) Int. Cl.: G06F 3/048, G06F 3/041

(54) **MOBILE INFORMATION PROCESSING TERMINAL**

(30) Priority: 26.09.2011 JP 2011208567
(71) Applicant: NEC CASIO Mobile Communications, Ltd., Kawasaki-shi Kanagawa 211-8666 (JP)
(72) Inventor: MATSUMOTO, Kenichi, Kanagawa 211-8666 (JP); SATO, Yuta, Kanagawa 211-8666 (JP)
(74) Representative: Vossius & Partner
(86) International application number: PCT/JP2012/005929
(87) International publication number: WO 2013/046596

(57) **Abstract**

An information processing terminal according to the present invention includes: a touch screen display device 110; a control device 120 configured to control a display state on the touch screen display device; and a position detecting means 130 for detecting a specific position with respect to the touch screen display device 110. The control device 120 includes a display control part 121 configured to, in accordance with a distance between the position of an operator detected by the position detecting means 130 and a display region occupied by the display data on the touch screen display device, change a display state of the display data.

## Description

### TECHNICAL FIELD

The present invention relates to a mobile information processing terminal, more specifically, relates to a mobile information processing terminal that has a touch screen.

### BACKGROUND ART

In recent years, a mobile information processing terminal such as a mobile phone equipped with a touch screen integrally composed of a touch input device and a display device has become popular. With such a mobile information processing terminal, it is possible to display any input key on a touch screen because an input device is also a display device. For example, it is possible to detect whether the orientation of a substantially rectangular touch screen of a mobile information processing terminal is portrait or landscape and display the input key in a state that the orientation of the input key is changed depending on the orientation of the touch screen. As a related technique, Patent Document 1 discloses a technique of imaging the face of a user of a mobile terminal to detect the orientation of the user and controlling the display orientation of a display part depending on the orientation of the user.

Patent Document 1: Japanese Unexamined Patent Application Publication No. 2007-017596

There is a case where a mobile phone equipped with a touch screen integrally composed of a touch input device and a display device as described above is used placed horizontally on the face of a desk. In such a case, when the user operates the mobile phone from directly above the touch screen, it is easy for the user to view a key or the like displayed on the screen. However, when the user operates the mobile phone from the side, namely, from the horizontal direction to the screen, there arises a problem that it is hard for the user to view the key or the like displayed on the screen and operability degrades.

### SUMMARY

Accordingly, an object of the present invention is to solve the abovementioned problem, degradation of the visibility and operability of an information processing terminal equipped with a touch screen display device.

An information processing terminal as an exemplary embodiment of the present invention includes:
a touch screen display device;
a control device configured to control a display state on the touch screen display device; and
a position detecting means for detecting a specific position with respect to the touch screen display device,
wherein the control device includes a display control part configured to, in accordance with a distance between a specific position detected by the position detecting means and a display region occupied by display data on the touch screen display device, change a display state of the display data.

Further, a program as another exemplary embodiment of the present invention is a computer program including instructions for causing an information processing terminal including a touch screen display device to realize:
a position detecting means for detecting a specific position with respect to the touch screen display device; and
a display control part configured to control a display state on the touch screen display device and, in accordance with a distance between a specific position detected by the position detecting means and a display region occupied by display data on the touch screen display device, change a display state of the display data.

Further, a display control method as another exemplary embodiment of the present invention is a display control method by an information processing terminal including a touch screen display device, the display control method including:
detecting a specific position with respect to the touch screen display device; and
in accordance with a distance between a detected specific position and a display region occupied by display data on the touch screen display device, changing a display state of the display data on the touch screen display device.

Configured as described above, the present invention achieves increase of the operability of an information processing terminal equipped with a touch screen display device.

### BRIEF DESCRIPTION OF DRAWINGS

Figs. 1A and 1B are diagrams showing the exterior of a mobile terminal in a first exemplary embodiment;
Fig. 2 is a block diagram showing the configuration of the mobile terminal in the first exemplary embodiment;
Fig. 3 is a diagram for describing an operation to recognize an operator by the mobile terminal in the first exemplary embodiment;
Figs. 4A and 4B are diagrams for describing the operation to recognize the operator by the mobile terminal in the first exemplary embodiment;
Figs. 5A and 5B are diagrams showing examples of display of a display screen by the mobile terminal in the first exemplary embodiment;
Figs. 6A and 6B are diagrams showing examples of display of a display screen by the mobile terminal in the first exemplary embodiment;
Fig. 7 is a flowchart showing an operation by the mobile terminal in the first exemplary embodiment;
Figs. 8A and 8B are diagrams showing examples of display of a display screen by a mobile terminal in a second exemplary embodiment;
Figs. 9A and 9B are diagrams showing examples of display of a display screen by a mobile terminal in a third exemplary embodiment;
Figs. 10A and 10B are diagrams showing examples of display of a display screen by a mobile terminal in a fourth exemplary embodiment;
Fig. 11 is a flowchart showing an operation by the mobile terminal in the fourth exemplary embodiment;
Figs. 12A and 12B are diagrams showing the exterior of a mobile terminal in a fifth exemplary embodiment;
Fig. 13 is a diagram for describing an operation to recognize an operator by the mobile terminal in the fifth exemplary embodiment;
Figs. 14A and 14B are diagrams for describing the operation to recognize the operator by the mobile terminal in the fifth exemplary embodiment;
Fig. 15 is a flowchart showing an operation by the mobile terminal in the fifth exemplary embodiment;
Fig. 16 is a diagram for describing an operation to recognize an operator by a mobile terminal in a sixth exemplary embodiment;
Figs. 17A and 17B are diagrams showing examples of display of a display screen by the mobile terminal in the sixth embodiment;
Figs. 18A and 18B are diagrams for describing an operation to recognize an operator by a mobile terminal in a seventh exemplary embodiment;
Fig. 19 is a diagram for describing the setting of a sensitivity to a contact input by contact on a mobile terminal in an eighth exemplary embodiment; and
Fig. 20 is a function block diagram showing the configuration of an information processing terminal in Supplementary Note 1 of the present invention.

### EXEMPLARY EMBODIMENTS

### <First Exemplary Embodiment>

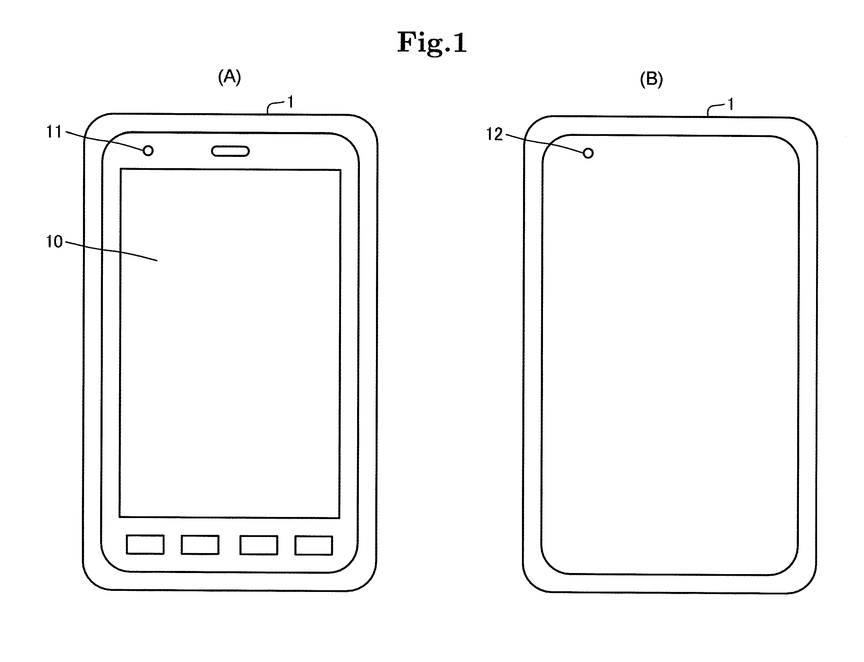

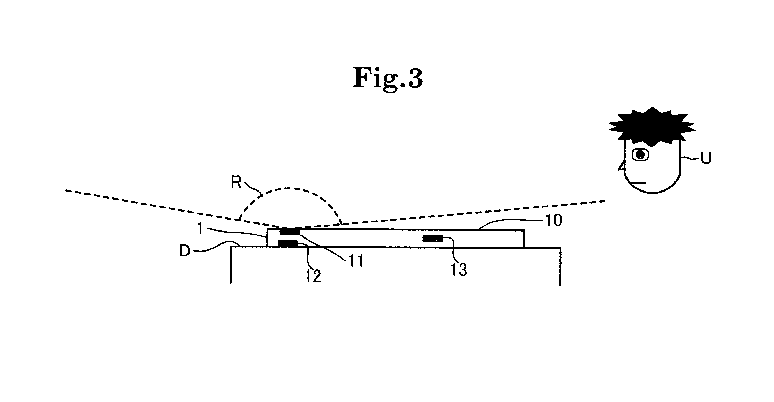

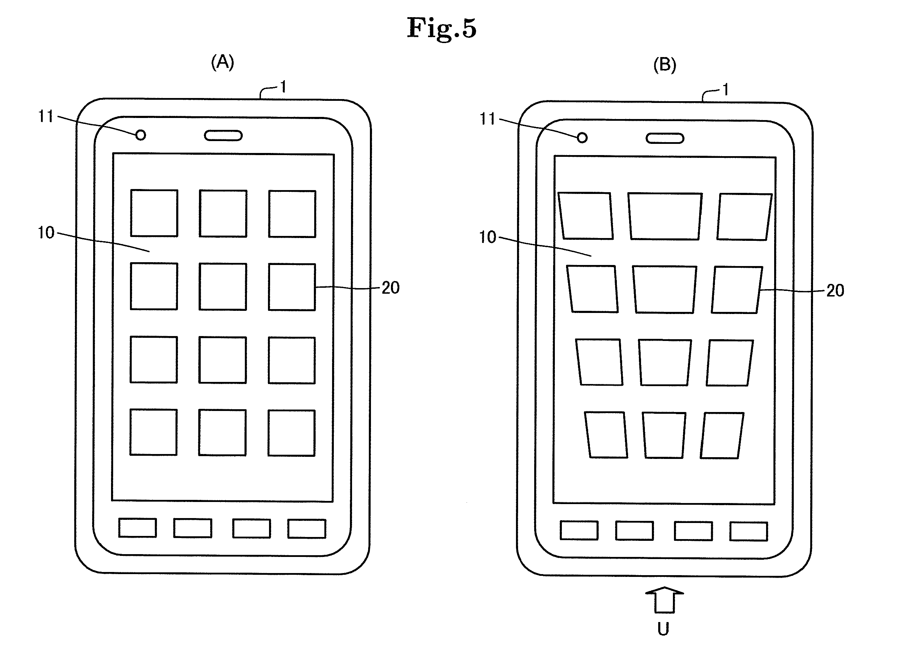

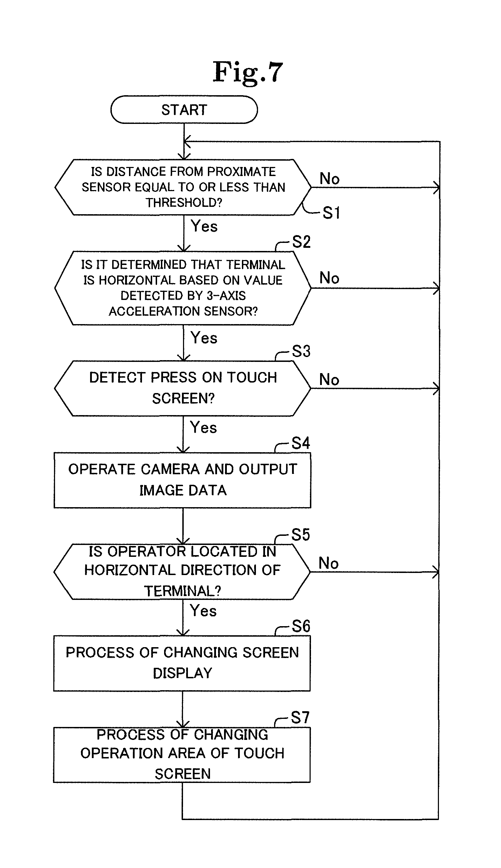

Referring to Figs. 1A to 7, a first exemplary embodiment of the present invention will be described. Figs. 1A to 2 are diagrams showing the configuration of a mobile terminal in this exemplary embodiment. Figs. 3 to 4B are diagrams for describing an operation to recognize an operator by the mobile terminal. Figs. 5A to 6B are diagrams showing examples of display of a display screen by the mobile terminal. Fig. 7 is a flowchart showing an operation by the mobile terminal.

### [Configuration]

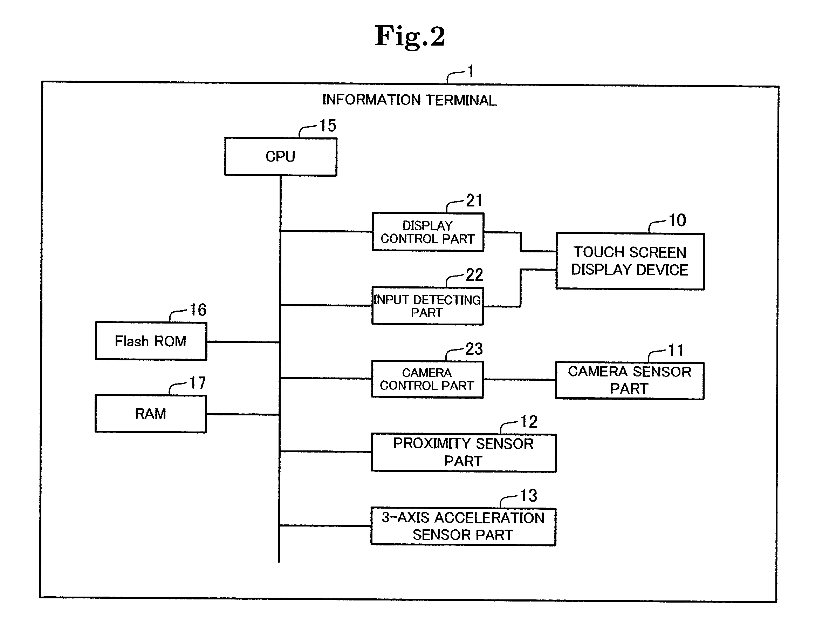

Figs. 1A and 1B are diagrams showing the exterior of a mobile terminal 1 according to the present invention. Fig. 1A and 1B show exteriors taken from one face (a front face) and the other face (a rear face) of the mobile terminal 1, respectively. Fig. 2 is a block diagram showing the circuit configuration of the mobile terminal 1.

As shown in Fig. 2, the mobile terminal is a general information processing terminal that includes a CPU 15 as a central processing unit, and a Flash Rom 16 and a RAM 17 as storage devices storing various kinds of data. The CPU 15 is connected with circuits and devices in the terminal via a bus as described later. The Flash ROM 16 is a rewritable storage memory that stores various kinds of control programs executed by the CPU 15 and user data. The RAM (Random Access Memory) 17 is a working memory that stores data temporarily necessary for the CPU 15 to execute the programs.

This exemplary embodiment describes as an example a case where the mobile terminal 1 is a mobile phone terminal such as a so-called smartphone, but the mobile terminal 1 according to the present invention may be any information processing device, such as a PHS (Personal Handy-phone System), a PDA (Personal Data Assistance, Personal Digital Assistants: personal mobile information communication equipment), a tablet terminal, a personal computer, a game terminal, an electronic dictionary, and a car navigation system.

As shown in Fig. 1A, the mobile terminal 1 includes a touch screen display device 10 on the front face. This touch screen display device 10 includes an input device, such as an electrostatic touch screen, that accepts a contact input by an operator, and a display device such as a liquid crystal panel or an organic EL. A display face of the display device configures the input device of the touch screen.

Further, as shown in Fig. 2, the mobile terminal 1 includes a display control part (a control device) 21 that controls a display state on the display device configuring the touch screen display device 10. This display control part 21, which is connected to the CPU 15, controls the display state of display data such as an icon displayed on a display screen of the touch screen display device 10, in accordance with a position (a specific position) of the operator detected as described later. The display control part 21 is structured by installation of a program into the CPU 15, or structured by a dedicated arithmetic device.

Further, as shown in Fig. 2, the mobile terminal 1 includes an input detecting part (a contact detecting part) 22 that detects a contact input to the input device configuring the touch screen display device 1. This input detecting part 22, which is connected to the CPU 15, detects and accepts a contact input at a display site of display data such as an icon displayed on the display screen as described later. That is, the input detecting part 22 has a function of, when a display region such as a display area or a display range of display data changes, detecting a contact input within the display range. The input detecting part 22 is structured by installation of a program into the CPU 15, or structured by a dedicated arithmetic device.

Further, as shown in Fig. 1A, the mobile terminal 1 has a camera sensor part 11 that captures an image on one face, which is the face with the touch screen display device 10 provided. The camera sensor part 11 is an imaging device such as a CCD image sensor or a CMOS sensor. With this, as shown in Fig. 2, the mobile terminal 1 includes a camera control part 23, which is a circuit controlling the camera sensor part 11, namely, the imaging device. This camera control part 23 sends captured image data to the CPU 15, and the CPU 15 detects the position of the operator as the specific position from the data content of the image data as described later. That is, the camera sensor part 11, the camera control part 23, and the CPU 15 function as a position detecting means for detecting the position of the operator in cooperation with each other. Herein, when the captured image data contains a person, the position detecting means recognizes the person as the operator and detects the operator's position as the specific position. However, the position detecting means may detect another object from the image data and detect the object's position as the specific position.

Further, as shown in Fig. 1B, the mobile terminal 1 includes a proximity sensor part 12 on the other face, which is the opposite face to the face with the touch screen display device 10 provided. This proximity sensor part 12, which is a sensor detecting a distance from an object, detects that the mobile terminal 1 is in contact with a plane such as a board of a desk D or a wall and notifies it to the CPU 15, for example, when a distance from an object is equal to or less than a criterion value.

Furthermore, the mobile terminal 1 includes a 3-axis acceleration sensor part 13 inside thereof. This 3-axis acceleration sensor part 13 detects acceleration of the mobile terminal 1 in directions of the three axes with respect to the Earth's gravity to detect an inclination angle of the mobile terminal 1 with respect to the horizontal face, and notifies it to the CPU 15.

Then, in a case where the proximate sensor part 12 detects that the mobile terminal 1 is in contact with an object and the 3-axis acceleration sensor part 13 determines that the detected inclination angle of the mobile terminal 1 indicates a horizontal state, the CPU 15 detects that the mobile terminal 1 is kept placed horizontally on a given board. That is, the proximity sensor part 12, the 3-axis acceleration sensor part 13, and the CPU 15 function as a horizontal state detecting means for detecting that the mobile terminal 1 is in the horizontal state in cooperation with each other.

It is assumed that the horizontal state in the present invention includes a case where the inclination angle of the mobile terminal 1 with respect to the horizontal face detected by the 3-axis acceleration sensor part 13 described above is within a previously set range (e.g., within a range of 5 degrees with respect to the horizontal face). Moreover, a condition for determining that the mobile terminal 1 is in the horizontal state is not necessarily that the mobile terminal 1 is placed on an object such as a board. That is, the mobile terminal 1 does not necessarily include the proximity sensor part 12. Moreover, the means for detecting that the mobile terminal 1 is in the horizontal state is not necessarily realized by the abovementioned configuration, and may be realized by another configuration.

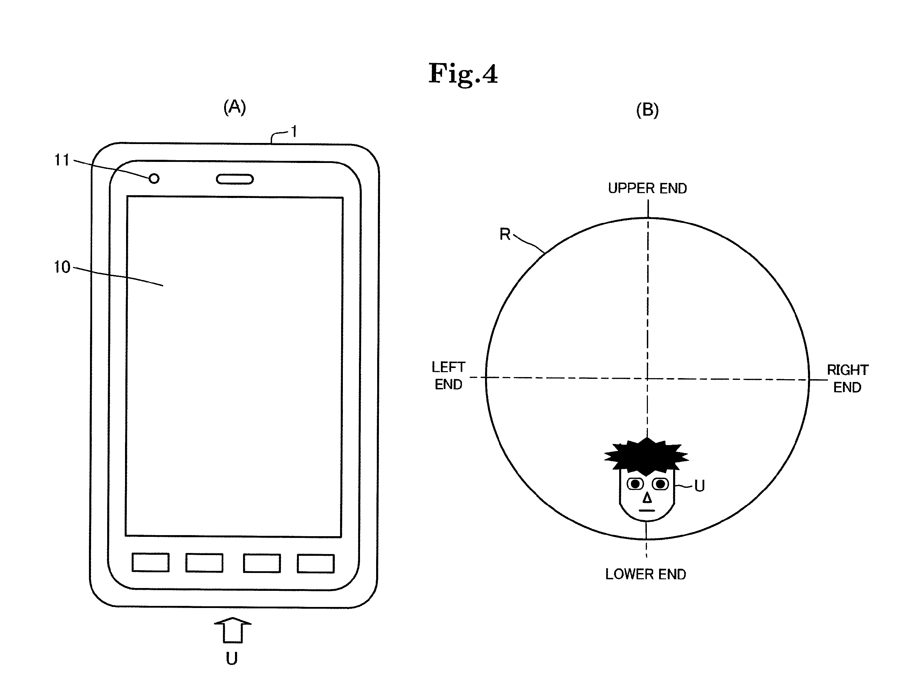

Next, a detailed function of the abovementioned position detecting means configured by the camera sensor part 11 and so on will be described. The position detecting means configured by the camera sensor part 11, the CPU 15 and so on executes an image recognition process on image data captured by the camera sensor part 11, and identifies which direction the operator is located in. To be specific, in this exemplary embodiment, firstly, image data of a range shown by symbol R in Figs. 3 and 4B is acquired by the camera sensor part 11 placed at the upper end part of the mobile terminal 1 as shown in Fig. 3. After that, in the RAM 17, the image recognition process on the image data is executed by the CPU 15, and a process of detecting a person (a face) is executed. For example, matching with previously stored human face characteristic data or detection of a characteristic portion such as an eye or a mouth of a human by a statistical method is executed. Thus, it is detected which end side an operator U is located on of the mobile terminal 1 having a substantially rectangular external shape. That is, the specific position is detected.

For example, in a case where the image data is of an image shown in the imaging range R in Fig. 4B, because detecting the face of the operator U on the lower end side, the position detecting means detects that the operator U is located in the horizontal direction with respect to the mobile terminal 1 as shown in Fig. 3 and located on the lower end side in Fig. 4A. In a case where the operator U is located on an end side of a specific direction within the imaging range R shown in Fig. 4B, it is detected that the operator U is located on the end side and in a direction horizontal to the mobile terminal 1. In a case where the operator U is located in the center of the imaging range R, it is detected that the operator U is vertically above the mobile terminal 1.

The abovementioned detection of the position of the operator U is not necessarily performed by using a captured image. It may be performed by using another configuration capable of detecting a person, such as an infrared sensor. Moreover, by another configuration without using an image, the position of a detected object other than a person may be detected as the specific position.

When it is detected that the mobile terminal 1 is placed in the horizontal state and the operator U is located in a specific direction of the horizontal direction with respect to the mobile terminal 1 as described above, the display control part 21 changes the display state of the display screen of the touch screen display device 10 and displays the display screen. To be specific, firstly, the display control part 21 recognizes that the display screen is visually recognized from an end side of a specific direction of the mobile terminal 1 where the operator U is located, and changes the display orientation of the display data displayed on the touch screen display device 10 so that the end side becomes the lower side of the display screen. Then, the display control part 21 further changes the display state of the display data depending on a distance from the detected position of the operator U (the specific position) to the display region occupied by the display data on the display screen of the touch screen display device 10. To be specific, in this exemplary embodiment, as a distance from an end of a specific direction of the mobile terminal 1 where the operator U is located to each display position on the display screen becomes longer, the display control part 21 changes the display state of icons and the entire screen.

Examples of change of the display status of the image data displayed on the display screen by the display control part 21 in this exemplary embodiment are shown in Figs. 5A to 6B. Firstly, in the example shown in Figs. 5A and 5B, the display control part 21 controls so that, as a normal display state, a plurality of rectangular icons 20 are displayed on the display screen of the touch screen display device 10 as shown in Fig. 5A. In this instance, it is assumed that the display data is displayed in a display orientation that the lower side of the display data faces downward in Fig. 5A. When the mobile terminal 1 is placed on the desk D or the like to be brought into the horizontal state from the abovementioned state and it is detected that the operator U is located horizontally and on a specific end side (the lower end side) with respect to the mobile terminal 1 as shown in Fig. 5B, the display control part 21 firstly determines that the operator U is viewing from an arrow direction on the lower end side, and changes the display orientation of the data displayed on the touch screen display device 10 so that the lower end side becomes the lower side of the display screen. In the example shown in Fig. 5B, however, the display orientation is not changed from that in Fig. 5A. Although the shape of the icons 20 is described as rectangular above, a description will be further made assuming the shape is square hereinafter. However, the shape of the icons 20 is not limited to a rectangular shape and may be any shape, for example, a circular shape.

Further, the display control part 21 changes the display shapes of the respective square-shaped icons 20 that are the display data displayed on the display screen to trapezoidal shapes so that the icons 20 becomes larger as a distance from the specific end of the mobile terminal 1 becomes longer, and displays the display screen as shown in Fig. 5B. That is, the display control part 21 changes the display shape of each of the icons 20 to a trapezoidal shape whose width closer to the operator U is shorter and whose width farther from the operator U is longer as compared with in the normal display state, and displays the display screen. Moreover, the display control part 21 increases the display sizes of the trapezoids of the icons 20 located farther from the operator U, and displays the display screen. Consequently, the icons 20 are displayed so that the operator U can feel a stronger sense of perspective, and the operator U can visually recognize the icons 20 located farther. Although an example that the display control part 21 changes the shape of the icon 20 to a trapezoidal shape in accordance with a distance between a display position of the icon 20 and the end of the mobile terminal 1 is described herein, the display control part 21 may change the shape to a shape similar to a parallelogram in accordance with a display position of the icon 20.

To be specific, the display control part 21 specifies a direction of a distance from a specific end of the mobile terminal 1 where the operator is located to each of the icons 20, and determines a relative position of each of the icons 20 with respect to the direction of the distance. For example, the display control part 21 determines the icon 20 in the farthest position and the icon 20 in the nearest position with respect to the direction of the distance as the distal icon 20 and the proximal icon 20, respectively. All of the icons displayed in parallel to the specific end of the mobile terminal 1 may be considered to be in equal positions with respect to the direction of the distance. Then, in accordance with the relative position of each of the icons 20 with respect to the specific end, the display control part 21 executes a display mode changing process on each of the icons 20. This display mode changing process is a process of, for example, performing shape change so that the respective icons 20 have trapezoidal shapes as described above and then performing size change so that the rate of the data size of each of the icons 20 becomes smaller in the proximal position than in the distal position or becomes larger in the distal position than in the proximal position. Alternatively, in the display mode changing process, the display control part 21 may execute only either the shape changing process or the scaling process described above.

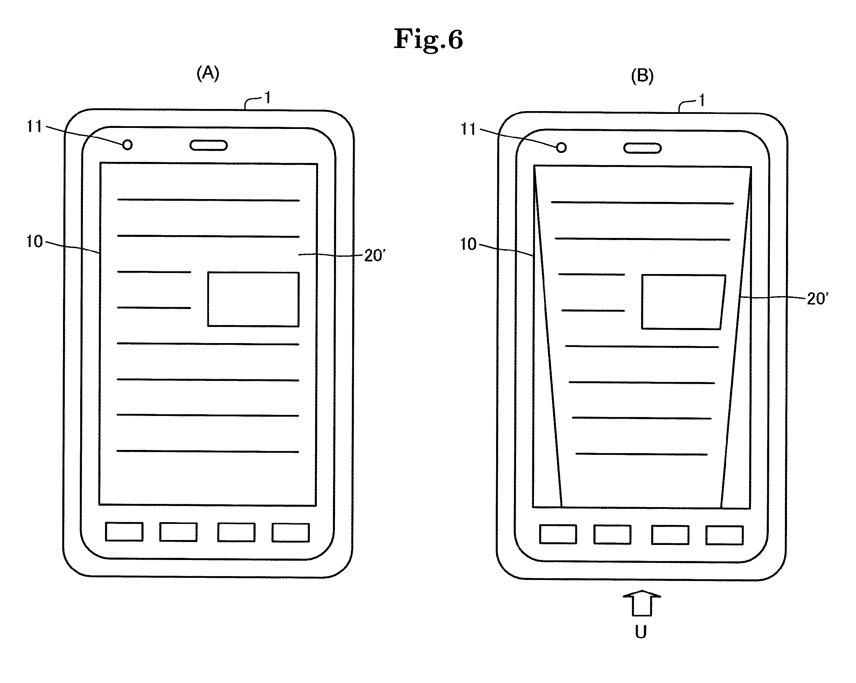

Change of the display state of the icons 20 shown in Fig. 5B is an example, and the display control part 21 may change to another shape and display. Moreover, the display control part 21 does not need to change the size of the icon 20 necessarily, and may change an image element added to the icon 20 as described in another exemplary embodiment. Furthermore, although a case of changing the shape of each of the icons 20 and displaying is illustrated above, it is also possible to change display data 20' displayed on the entire touch screen display device 10 as shown in Fig. 6A to a state as shown in Fig. 6B that the width of the whole screen becomes gradually shorter toward an end side where the operator U is located and the width of the whole screen becomes gradually longer toward the opposite end side to the abovementioned end side. That is, in the same manner as described above, the display control part 21 determines a distal position and a proximal position of the whole screen in a direction of a distance from a specific end of the mobile terminal 1 to the screen, decreases the rate of the data size of the whole screen from the distal position to the proximal position or increases the rate from the proximal position to the distal position, and displays the display screen.

Further, as the icons 20 are displayed with the shapes changed to trapezoidal shapes or the like as described above, the input detecting part 22 executes a process of changing a range to detect a contact input to the icons 20. That is, the input detecting part 22 accepts a contact input when detecting the contact input on the square-shaped icon 20 in the normal display state shown in Fig. 5A, but after the display state is changed as shown in Fig. 5B, detects a contact input within a shape range of the trapezoidal-shaped icon 20 and accepts the input.

The display state changing process by the display control part 21 described above may be executed depending on the position of the operator U even when the touch screen display device 10 of the mobile terminal 1 is not located in the horizontal state.

### [Operation]

Next, referring to a flowchart shown in Fig. 7, an operation of the mobile terminal 1 with the abovementioned configuration will be described. First, the proximate sensor 12 placed on the rear face of the mobile terminal 1 detects its distance from a proximate object. When the distance from the proximate object is equal to or less than a previously set threshold, it is determined that the mobile terminal 1 is in contact with the proximate object (step S1: Yes).

Subsequently, a placement angle of the mobile terminal 1 is detected from a value detected by the 3-axis acceleration sensor 13 included by the mobile terminal 1. When the placement angle of the mobile terminal 1 is within a previously set threshold with respect to an angle perpendicular to the direction of the Earth's gravity, it is determined that the mobile terminal 1 is placed horizontally (step S2: Yes).

In a case where there is a contact input (a press) on the touch screen display device 10 in a state that the mobile terminal 1 is in contact with the proximate object and placed horizontally as described above (step S3: Yes), the camera sensor part 11 placed on the front face of the mobile terminal 1 is caused to operate (step S4). Then, imaging information acquired by the camera sensor part 11 is converted into two-dimensional image data and outputted by the camera control part 23 (step S4).

After that, the image data outputted by the camera control part 23 is sent to the RAM 17 and subjected to the image recognition process by the CPU 15, and it is thereby identified which direction of the mobile terminal 1 the operator U is located in. In this instance, when it is identified that the operator U is located in the center part of the captured image data, it is determined that the operator U is vertically above the mobile terminal 1. On the other hand, when it is identified that the operator U is located at an end in a specified direction of the mobile terminal 1 within the image data, it is determined that the operator U is operating from a position nearly horizontal to the specific direction of the mobile terminal 1 (step S5: Yes). For example, in the example shown in Fig. 4B, because the position of the operator U within the image data of the imaging range R is on the lower end side, it is identified that the position of the operator U is on the lower end side of the mobile terminal 1 and, as shown in Fig. 4A, is operating the horizontally placed mobile terminal 1 in the arrow direction on the horizontal plane.

Then, based on the position of the operator U identified as described above, the display state of the display screen of the touch screen display device 10 is changed (step S6). For example, when it is identified that the operator U is located on the lower end side of the mobile terminal 1 as shown by arrow in Fig. 5B, the display orientation is firstly changed so that the lower end side of the mobile terminal 1 becomes the lower side of the display screen. The display screen is then changed to a trapezoidal-shaped display screen that the length in the width direction on the lower side of the screen display located on the side of the operator U, namely, on the near side from the operator U is shorter and the length in the width direction on the upper side of the screen display located on the farther side from the operator U is longer, as compared with the normal display state shown in Fig. 5A. Consequently, the operator can more easily view the screen display located far from him/her.

Further, along with the abovementioned image display processing, the shape of an operation area to detect a contact input on the touch screen display device 10 is also changed to a trapezoidal shape so as to correspond to the abovementioned display area (step S7). Consequently, the operator U can perform operation corresponding to the screen display, and can operate with ease.

As described above, according to the present invention, even when the operator U views the mobile terminal 1 from the horizontal direction in a state that the mobile terminal 1 is horizontally placed on a desk or the like, the operator U can easily check the display content because the display screen is displayed with perspective strongly reflected thereon, and the operability increases.

### <Second Exemplary Embodiment>

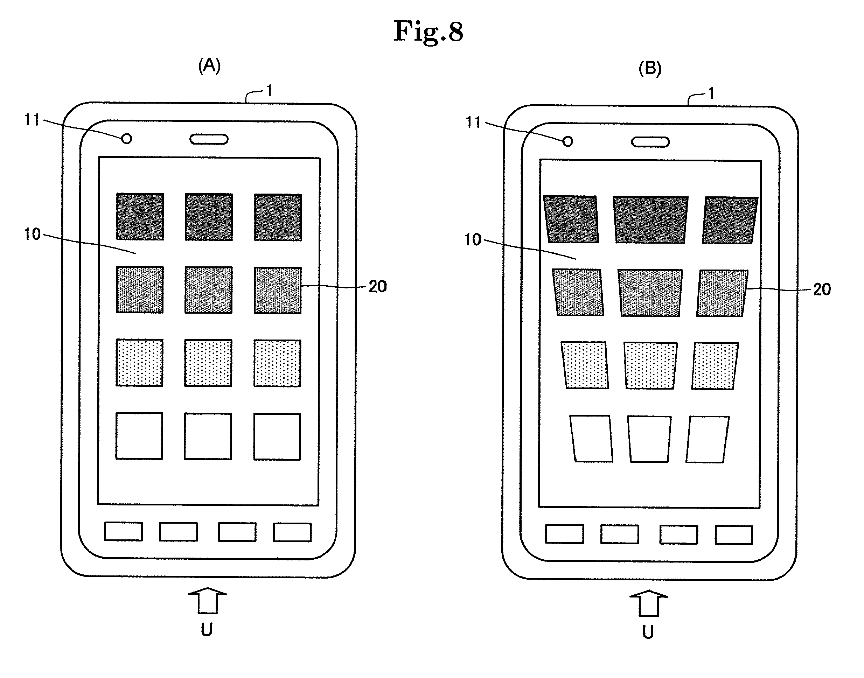

Next, referring to Figs. 8A and 8B, a second exemplary embodiment of the present invention will be described. Figs. 8A and 8B are diagrams showing display examples of a display screen of a mobile terminal in this exemplary embodiment.

The mobile terminal 1 of this exemplary embodiment has almost the same configuration as that of the first exemplary embodiment described above, but a method for changing and displaying in accordance with the position of the operator U by the display control part 21 is different. In this exemplary embodiment, when detecting that the mobile terminal 1 is placed in the horizontal state and the operator U is located in a specific direction of the horizontal direction to the mobile terminal 1 as described above, the display control part 21 displays in a state that display color strength or luminance of the icons 20 or the whole screen is changed in accordance with a distance from the detected position of the operator U to a display position of display data on the display screen of the touch screen display device 10.

For example, as compared with the normal display state described in Fig. 5A, in the example shown in Fig. 8A, when it is identified that the position of the operator U is on the lower side of the mobile terminal 1 (an arrow position), the display control part 21 displays in a manner that the display strength of the icons 20 located near from the operator U is low and the display strength of the icons 20 located far from the operator U is high. The display control part 21 may change the display strength of the icons 20 so that the display strength becomes higher from the lower side to the upper side, or may change the display strength of the entire display screen of the touch screen display device 10 so that the display strength becomes higher from the lower side to the upper side. Alternatively, contrary to the above, the display control part 21 may display in a manner that the display strength on the near side from the operator U is high and the display strength on the far side from the operator U is low.

Further, the display control part 21 may also change the luminance of the display screen in accordance with the distance from the operator U. For example, the display control part 21 may display in a manner that the luminance on the near side from the operator U is low and the luminance on the far side from the operator U is high, or vice versa.

Further, Fig. 8B shows an example of the display screen that the display strength of the icons 20 whose shapes and sizes have been changed in the first exemplary embodiment is changed in accordance with the position from the operator U as in the example shown in Fig. 8A.

Also in this case, even when the operator U views the mobile terminal 1 from the horizontal direction in a state that the mobile terminal 1 is horizontally placed on a desk or the like, the operator U can easily check the display content because the display content is displayed with perspective strongly reflected thereon, and the operability increases.

### <Third Exemplary Embodiment>

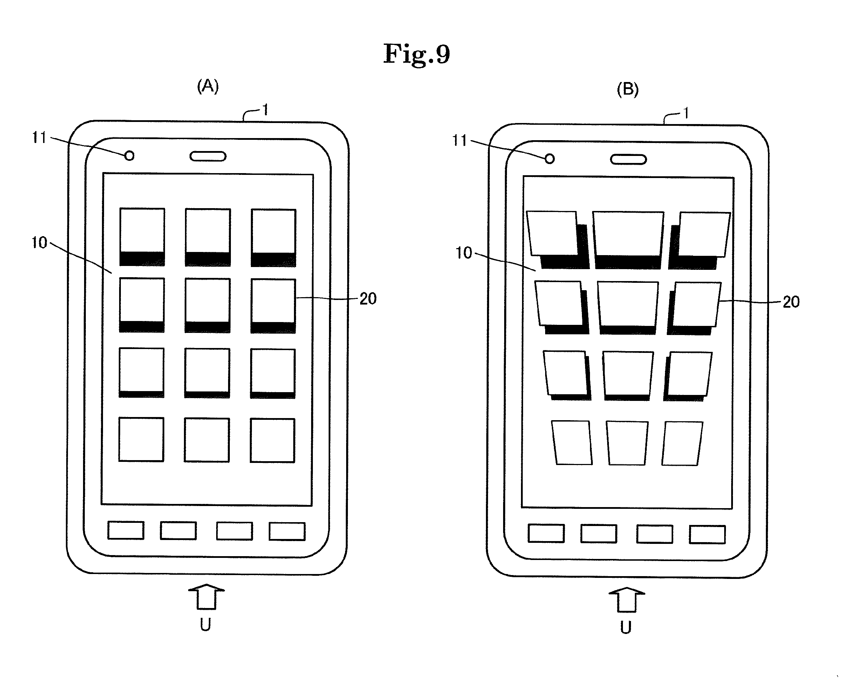

Next, referring to Figs. 9A and 9B, a third exemplary embodiment of the present invention will be described. Figs. 9A and 9B are diagrams showing display examples of a display screen of a mobile terminal in this exemplary embodiment.

The mobile terminal 1 of this exemplary embodiment has almost the same configuration as that of the first exemplary embodiment described above, but a method for changing and displaying in accordance with the position of the operator U by the display control part 21 is different. In this exemplary embodiment, when detecting that the mobile terminal 1 is placed in the horizontal state and the operator U is located in a specific direction of the horizontal direction to the mobile terminal 1 as described above, the display control part 21 in this exemplary embodiment displays the display screen that a display region occupied by a shaded display displayed in the vicinity of a display region of each of the icons 20 or the height of a 3-dimensional display is changed in accordance with a distance from the detected position of the operator U to a display region of display data on the display screen of the touch screen display device 10.

For example, as compared with the normal display state described in Fig. 5A, in the example shown in Fig. 9A, when it is identified that the position of the operator U is on the lower side (an arrow position) of the mobile terminal 1, the display control part 21 displays a small (shallow) black shaded display in the rear and on the lower side of the icon 20 located near from the operator U and a large (deep) black shaded display in the rear and on the lower side of the icon 20 located far from the operator U. Moreover, Fig. 9B shows an example that shaded displays having different sizes depending on their positions from the operator U as in the example shown in Fig. 9A are displayed at the icons 20 whose shapes and sizes have been changed in the first exemplary embodiment.

To be specific, the display control part 21 changes a display region of a shaded display as in the process of changing the display mode of the icons 20 described above. That is, the display control part 21 specifies a range direction from a specific end of the mobile terminal 1 to each of the icons 20, and determines a relative position of each of the icons 20 with respect to the range direction. For example, the display control part 21 determines the icons 20 existing in the farthest position and the nearest position, respectively, from the specific end of the mobile terminal 1 with respect to the range direction, as the distal icon 20 and the proximal icon 20. All of the icons displayed in parallel to the specific end of the mobile terminal 1 may be considered to be in equal positions with respect to the range direction. Then, the display control part 21 executes a shaded display changing process on the respective icons 20 in accordance with the relative distances of the respective icons 20 from the specific end. This shaded display changing process is a process of changing the size of the shaded display, for example, decreasing the rate of the data size of the shaded display of each of the icons 20 from the distal position to the proximal position, or increasing the rate from the proximal position to the distal position so that the shaded display becomes a trapezoid in the same manner as each of the icons 20 as described above.

Figs. 9A and 9B show a case where a shaded display is displayed on the lower side of each of the icons 20, but a 3-dimensional display that makes the icons 20 exert a 3-dimensional visual effect may be displayed instead of the shaded display. That is, in a case where the mobile terminal 1 is horizontally placed and the position of the operator U with respect to the terminal 1 is identified, a 3-dimensional display displayed with a more height as the distance from the operator U becomes farther may be displayed together in the rear and on the lower side of each of the icons 20.

Also in this case, even when the operator U views the mobile terminal 1 from the horizontal direction in a state that the mobile terminal 1 is placed horizontally on a desk or the like, the operator U can easily check the display content because the display content is displayed with perspective strongly reflected thereon, and the operability increases.

### <Fourth Exemplary Embodiment>

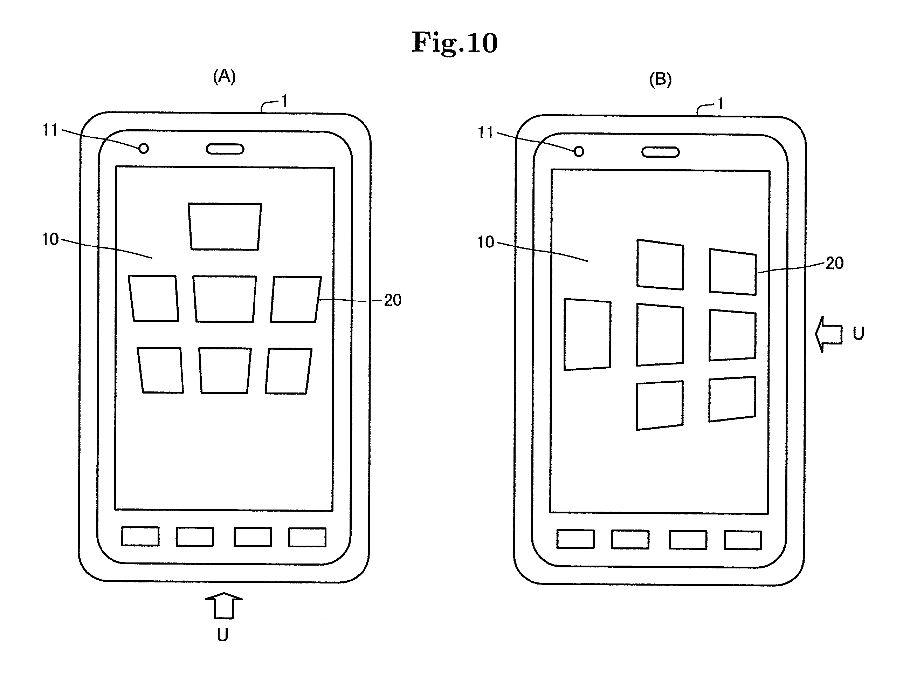

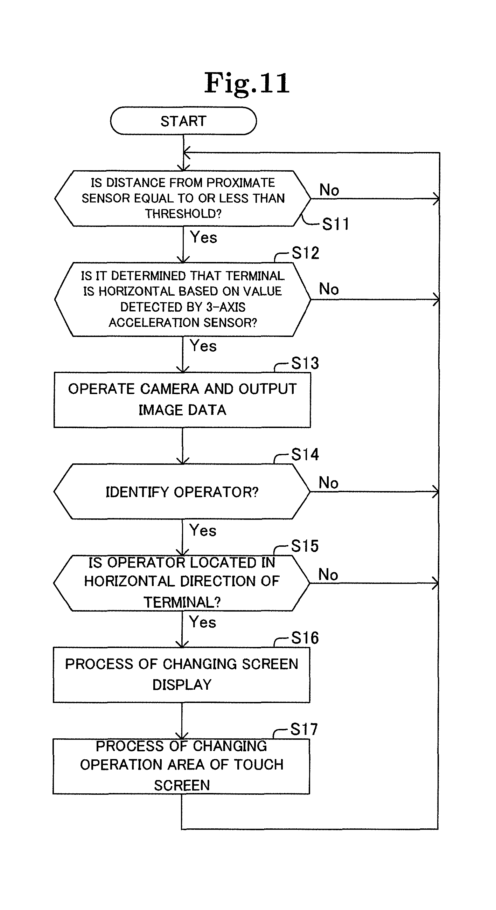

Next, referring to Figs. 10A to 11, a fourth exemplary embodiment of the present invention will be described. Figs. 10A and 10B are diagrams showing display examples of a display screen of a mobile terminal in this exemplary embodiment, and Fig. 11 is a flowchart showing an operation of the mobile terminal.

The mobile terminal 1 of this exemplary embodiment has almost the same configuration as that of the first exemplary embodiment described above, but is different in that the position of the operator U is constantly detected and the display screen is changed and displayed as in the respective exemplary embodiments described above in accordance with the changed position of the operator U.

In the first exemplary embodiment described above, when it is detected that the mobile terminal 1 is placed in the horizontal state (steps S1 and S2 in Fig. 7) and a press on the touch screen display device 10 is detected (step S3 in Fig. 7), the camera is caused to operate to detect the position of the operator U and display control is executed (steps S4 to S7 in Fig. 7). On the other hand, in this exemplary embodiment, when it is detected that the mobile terminal 1 is placed in the horizontal state (steps S11 and S12 in Fig. 11), the camera is caused to operate (step S13 in Fig. 11), and it is determined whether the operator U exists within captured image data (step S14 in Fig. 11). In this instance, for example, an image recognition process is executed on the image data and the outline and parts such as eyes, a nose and a mouth of a face existing within the image data are extracted based on a preset criterion, whereby existence of a face of a person is detected and it is determined that the operator U exists. After that, as in the first exemplary embodiment, the position of the operator U with respect to the mobile terminal 1 is detected, and display control is executed depending on the position (steps S 15 to S17 in Fig. 11).

Referring to Figs. 10A and 10B, an example of changing the display status of display data displayed on a display screen in this exemplary embodiment will be described. First, as shown in Fig. 10A, when it is detected that the operator U is located on the lower side of the mobile terminal 1 (see an arrow), the display screen is displayed in a state that the shape of each of the rectangular icons 20 that are display data displayed on the display screen is changed to a trapezoidal shape that is larger as a distance from a specific end of the mobile terminal 1 is longer as in the first exemplary embodiment described above. When the operator U moves to the right side of the mobile terminal 1 in this state, the mobile terminal 1 firstly detects that the operator U is located on the right side of the mobile terminal 1 from image data constantly captured by the camera sensor part 11.

Then, the mobile terminal 1 determines that the operator U is viewing from the right end side of the mobile terminal 1 and changes the display orientation of the display data displayed on the touch screen display device 10 so that the right end side is the lower side of the display screen as shown by an arrow in Fig. 10B. In other words, the display on the display screen shown in Fig. 10A is rotated 90 degrees in the counterclockwise direction so that the display data is displayed in an orientation shown in Fig. 10B. Then, also in this case, the display data is displayed in a state that the shape of each of the square icons 20 that are the display data displayed on the display screen is changed to a trapezoidal shape that is larger as the distance from a specific end of the mobile terminal 1 is longer. The display data may be changed and displayed in accordance with the distance from the operator U in a manner as described in the respective exemplary embodiments.

### <Fifth Exemplary Embodiment>

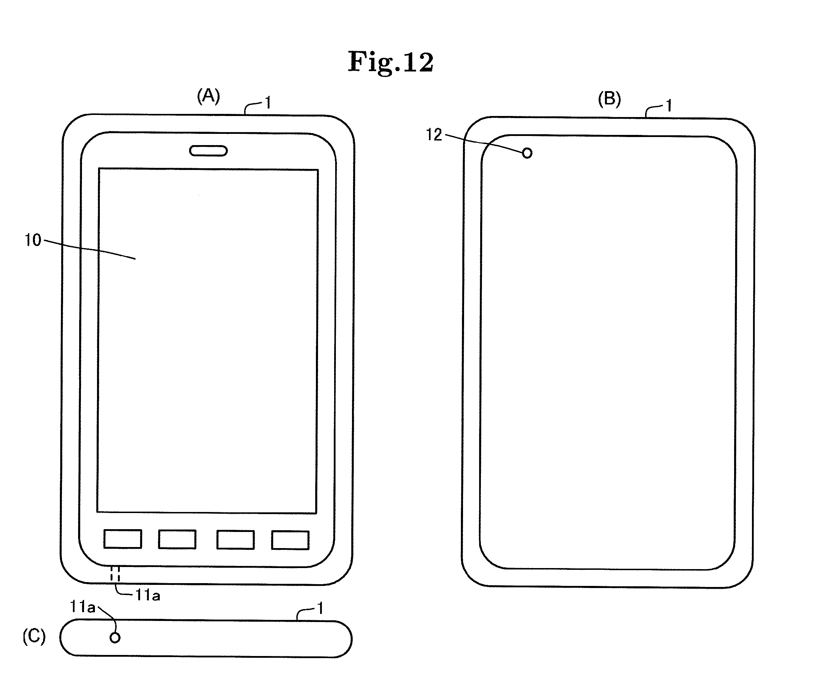

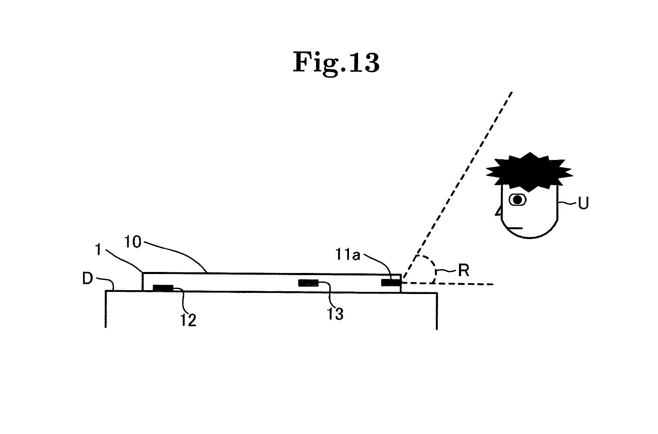

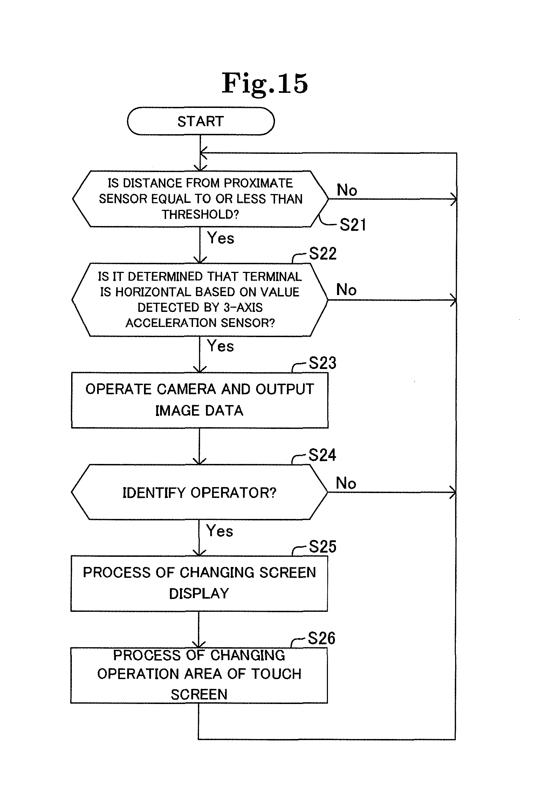

Next, referring to Figs. 12A to 15, a fifth exemplary embodiment of the present invention will be described. Figs. 12A and 12B are diagrams showing the exterior configuration of a mobile terminal in this exemplary embodiment. Figs. 13 to 14B are diagrams for describing an operation of recognizing an operator by the mobile terminal. Fig. 15 is a flowchart showing an operation by the mobile terminal.

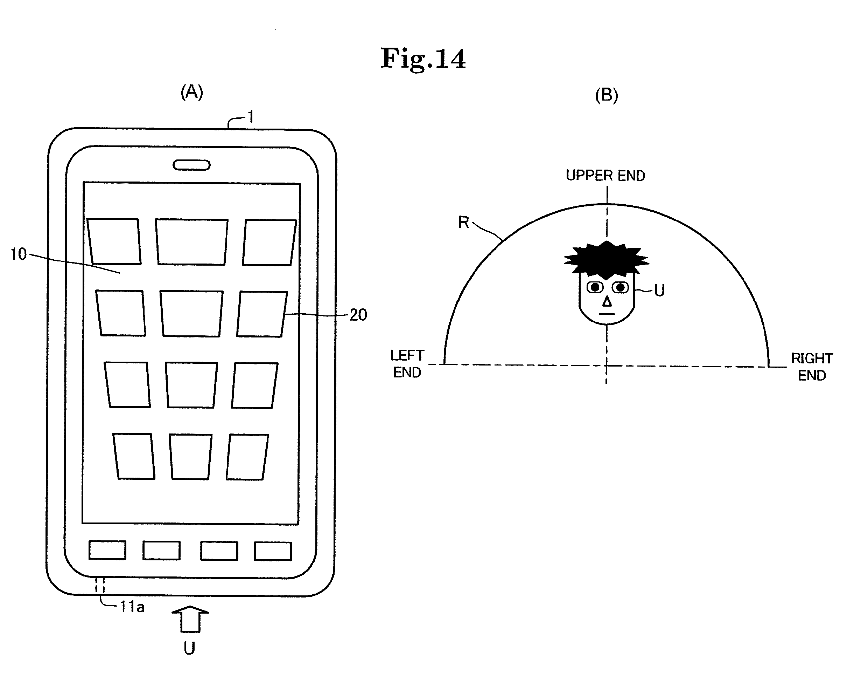

The mobile terminal 1 of this exemplary embodiment has almost the same configuration as those of the exemplary embodiments described above, but is different in that a camera sensor part 11 a is placed on a side face located at a lower end of the mobile terminal 1 as shown in Figs. 12A and 12B. Because the camera sensor part 11a is thus placed on a specific side face of the mobile terminal 1, the imaging range R is formed only in a direction of the specific side face of the mobile terminal 1 as shown in Fig. 13, and image data as shown in Fig. 14B is captured. Image data is captured as in the fourth exemplary embodiment described above in the following manner. When it is detected that the mobile terminal 1 is placed in the horizontal state (steps S21 and Ss22 in Fig. 15), the camera is caused to operate (step S23 in Fig. 15).

After that, as in the fourth exemplary embodiment, it is determined whether the operator U exists within the captured image data (step S24 in Fig. 15). In this instance, for example, an image recognition process is executed on the image data and the outline and parts such as eyes, a nose and a mouth of a face existing within the image data are extracted, whereby existence of a face of a person is detected and it is determined that the operator U exists. Consequently, it is determined that the position of the operator U is on the side of an end in the direction of the side face provided with the camera sensor part 11a, and display control is executed depending on the position as shown in Fig. 14A (steps S25, S26 in Fig. 15). The display data may be changed and displayed in accordance with the distance from the operator U in a manner as described in the above exemplary embodiments.

Although a case of placing the camera sensor part 11a only on the side face located at the lower end among the four side faces of the mobile terminal 1 is illustrated above, the camera sensor part 11 a may be placed on another side face. Alternatively, the camera sensor parts 11 a may be placed on a plurality of side faces. In this case, the side face with the camera sensor part 11a having detected the operator U placed is specified, and it is determined that the operator U is located on the side of an end of the specified side face, the display is changed in the same manner as described above.

### <Sixth Exemplary Embodiment>

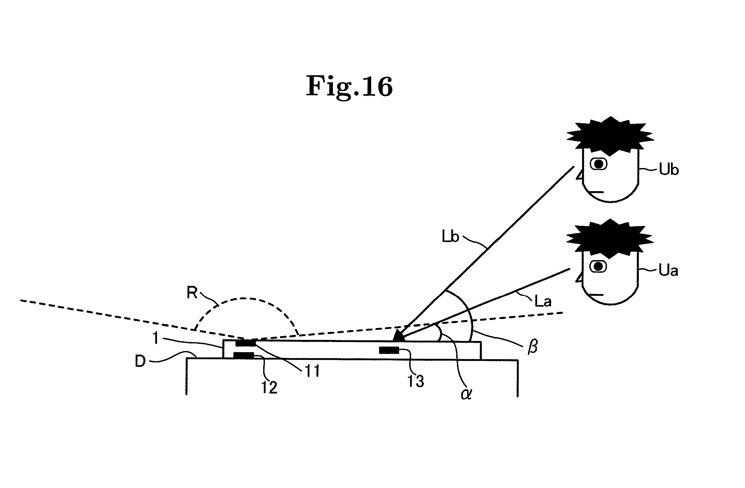

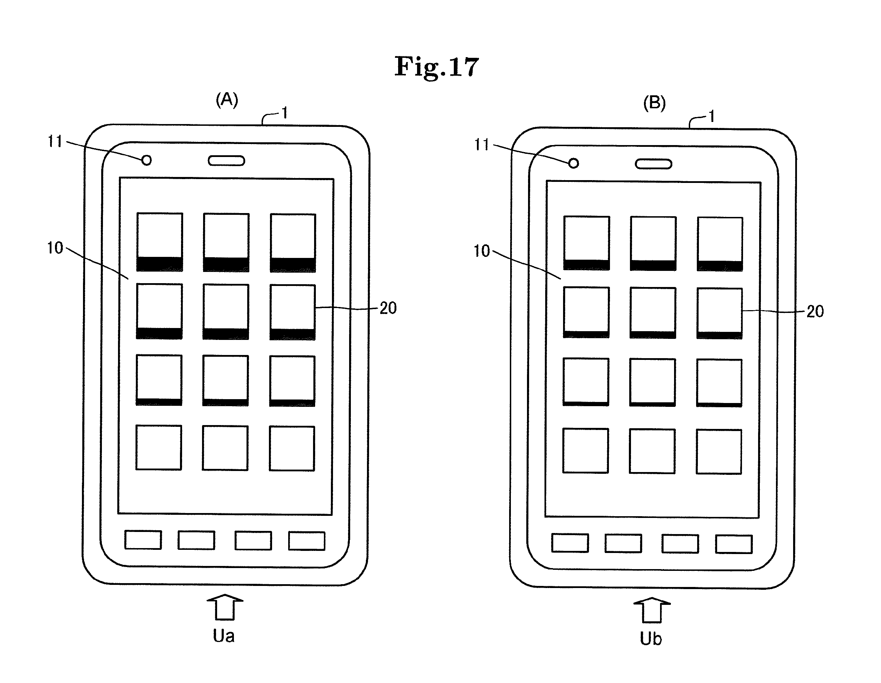

Next, referring to Figs. 16 to 17B, a sixth exemplary embodiment of the present invention will be described. Fig. 16 is a diagram for describing an operation of recognizing an operator by a mobile terminal. Figs. 17A and 17B are diagrams showing display examples of a display screen of the mobile terminal.

The mobile terminal 1 of this exemplary embodiment has almost the same configuration as those of the exemplary embodiments described above, but is different in a method for changing and displaying in accordance with the position of the operator U by the display control part 21. In this exemplary embodiment, when detecting that the mobile terminal 1 is placed in the horizontal state and the operator U is located in a specific direction of the horizontal direction to the mobile terminal 1, the display control part 21 changes the display state in accordance with the distance from the position of the operator U, and also changes the display state in accordance with an angle of the operator U with respect to a display face of the touch screen display device 10.

It is assumed that the positions of operators are those denoted by reference symbols Ua and Ub as shown in Fig. 16. In this case, an angle formed by a sightline La from an operator Ua to a display position of display data with the display screen is different from an angle formed by a sightline Lb from an operator Ub to the display position of the display data with the display screen. The former is an angle α, and the latter is an angle β. Since the angle of the operator Ua formed by the sightline with the display screen is smaller than that of the operator Ub, it is usual that the operator Ua is hard to visually recognize the display data.

In such a situation, the mobile terminal 1 in this exemplary embodiment firstly extracts the outlines and parts such as eyes, noses and mouths of faces existing in image data captured by the camera sensor part 11 based on a previously set criterion, and specifies the height positions of the faces of the respective operators Ua and Ub with respect to the mobile terminal 1. In this instance, specifically, the height positions of the eyes of the operators Ua and Ub are detected. Then, the angles of the operators Ua and Ub with respect to the operation screen are specified based on the detected height positions of the operators Ua and Ub, and display control depending on the angles is executed.

For example, as shown in Figs. 17A and 17B, for each of the operators Ua and Ub, a shaded display attached to each of the icons 20 is displayed larger as the distance from the operator is longer as described in the second exemplary embodiment, and moreover, the degree of change of the size of the shaded display is varied depending on the angles of the operators Ua and Ub. In other words, in the case of attaching a shaded display to the icon 20 displayed in the same position on the display screen, a shaded display for the operator Ua whose angle with respect to the display screen is smaller (Fig. 16A) is displayed larger than a shaded display for the operator Ub whose angle with respect to the display screen is larger than that of the operator Ua (Fig. 16B). Consequently, it becomes easier for the operator Ua to visually recognize the display data though the angle formed by the sightline with the display screen is small.

Although a case of changing the size of a shaded display depending on the angle is illustrated above, the size or shape of the display data may be changed as in the above exemplary embodiments, or the display color strength or the like may be changed depending on the angle of the position of the operator with respect to the display screen.

### <Seventh Exemplary Embodiment>

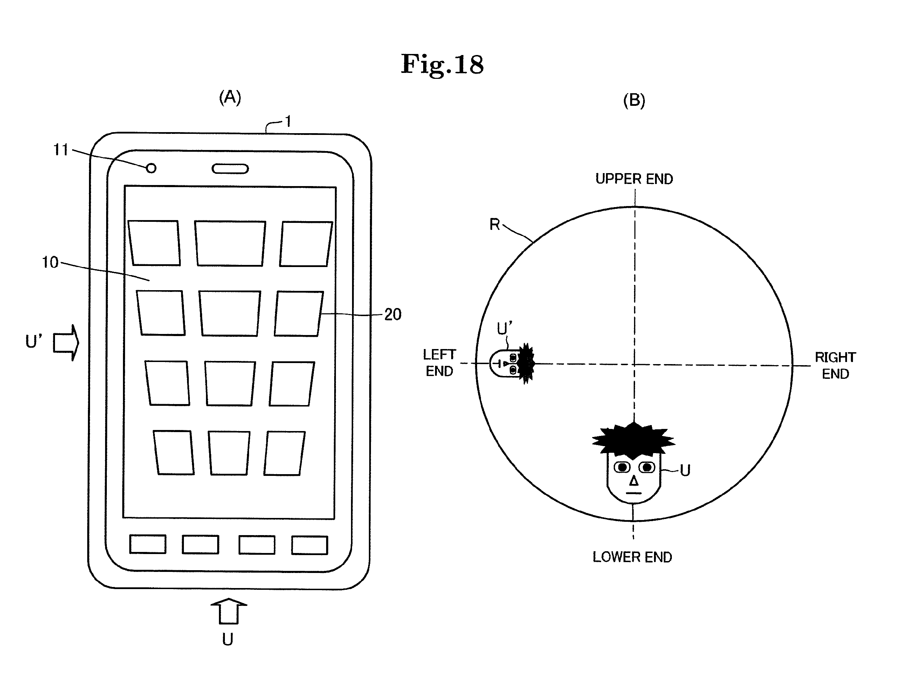

Next, referring to Figs. 18A and 18B, a seventh exemplary embodiment of the present invention will be described. Figs. 18A and 18B are diagrams for describing an operation of recognizing an operator by a mobile terminal.

The mobile terminal 1 of this exemplary embodiment has almost the same configuration as those of the exemplary embodiments described above, but is characterized by a function of specifying the position of a previously set specific operator U from image data captured by the camera sensor part 11.

For example, in a case where the operator U is located on the lower end side of the mobile terminal 1 and another operator U' is located on the left end side as shown by arrows U and U' in Fig. 18A, the two operators U and U' exist within the image data captured by the camera sensor part 11 as shown in Fig. 18B. In such a case, the mobile terminal 1 (the position detecting means) specifies the one operator U. For example, the mobile terminal 1 extracts the outlines and parts such as eyes, noses and mouths of all faces existing in the image data based on a previously set criterion, and specifies an operator whose specific part or outline of the face is the largest. After that, as shown in Fig. 18A, display of the icons 20 is changed in accordance with the position of the specified operator U.

Although a rule for specifying the one operator U within the image data is previously set, the operator U may be specified based on another rule. For example, the position of an operator existing in the image data last in a preset time period may be specified, or the position of a specific operator whose face characteristic data is previously stored may be specified. Alternatively, the mobile terminal 1 may detect an operation like blink of an operator existing in the image data and specify the position of the operator having performed the operation.

### <Eighth Exemplary Embodiment>

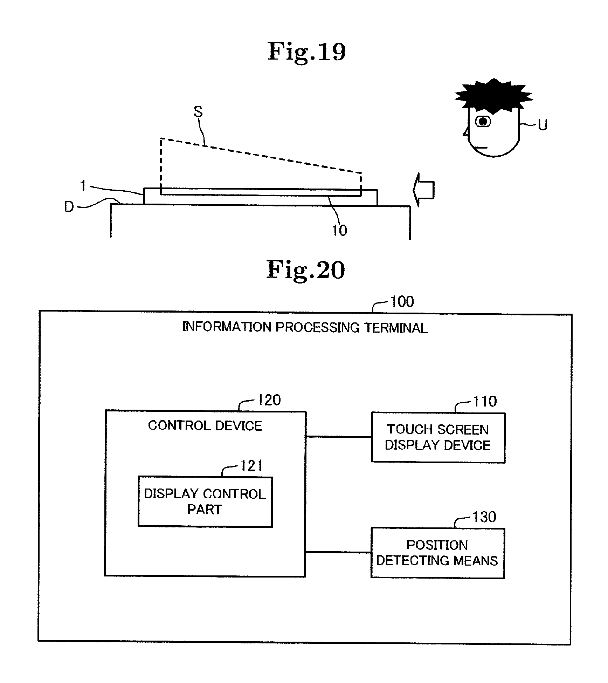

Next, referring to Fig. 19, an eighth exemplary embodiment of the present invention will be described. Fig. 19 is a diagram for describing an operation of recognizing an operator by a mobile terminal.

The mobile terminal 1 of this exemplary embodiment has almost the same configuration as those of the exemplary embodiments described above, but is different in that the input detecting part 22 has a function of changing the sensitivity of a contact input to the touch screen display device 10 in accordance with a distance from the position of the operator U to the touch screen display device 10.

For example, in a case where it is detected that the operator U is located on the lower end side of the mobile terminal 1 (see an arrow) as shown in Fig. 19, the display state is firstly changed in accordance with the distance from the position of the operator U as described above, and also, a detection sensitivity S to a contact input is set to be higher as the distance from the position of the operator U is farther. A dotted line shown by symbol S in Fig. 19 visually represents the height of the sensitivity S to a contact input.

Consequently, for example, the operator U enters input at a near site on the touch screen display device 10 by pressing the touch screen with a normal pressing force, but can enter input at a farther site like the upper end of the mobile terminal 1 with a smaller pressing force, for example, by just touching softly.

In the case of displaying a shaded display more largely or displaying a 3-dimensional display with a more height as a distance from the position of the operator U to the icons 20 displayed on the touch screen display device 10 becomes farther as described in the third exemplary embodiment, it is favorable to set so that the detection sensitivity S to a contact input becomes higher as the distance from the position of the operator U becomes farther as described above. Consequently, the operator 10 can obtain a visual sense as if display data is in a higher position than the display screen as the display data is positioned farther and can perform an operation, for example, press and enter input into such display data by softly touching, so that a visual sense and a sense of operation agree with each other and it is possible to increase operability.

<Supplementary Notes>

The whole or part of the exemplary embodiments disclosed above can be described as the following supplementary notes. The outline of configurations of an information processing terminal (see Fig. 20), a program, and a display control method according to the present invention will be described below. However, the present invention will not be limited to the following configurations.

### (Supplementary Note 1)

An information processing terminal 100, comprising:
a touch screen display device 110;
a control device 120 configured to control a display state on the touch screen display device 110; and
a position detecting means 130 for detecting a specific position with respect to the touch screen display device 110,
wherein the control device 120 includes a display control part 121 configured to, in accordance with a distance between a specific position detected by the position detecting means 130 and a display region occupied by display data on the touch screen display device 110, change a display state of the display data.

### (Supplementary Note 2)

The information processing terminal according to Supplementary Note 1, wherein the display control part is configured to determine a distal position and a proximal position on the display region in a direction of the distance from the specific position to the display data, and display in a manner that a display state varies from the distal position toward the proximal position.

### (Supplementary Note 3)

The information processing terminal according to Supplementary Note 2, wherein the display control part is configured to determine the distal position and the proximal position in the direction of the distance on the display region occupied by each of a plurality of display data displayed on the touch screen display device.

### (Supplementary Note 4)

The information processing terminal according to Supplementary Note 2 or 3, wherein the display control part is configured to display in a manner that a rate of a data size of the display data decreases from the distal position toward the proximal position, or display in a manner that the rate increases from the proximal position toward the distal position.

### (Supplementary Note 5)

The information processing terminal according to any of Supplementary Notes 1 to 4, wherein the display control part is configured to change a display region occupied by shaded display data displayed in vicinity of a display region of display data displayed on the touch screen display device, in accordance with the distance.

### (Supplementary Note 6)

The information processing terminal according to any of Supplementary Notes 1 to 5, wherein the display control part is configured to change a height of a three-dimensional display displayed in vicinity of a display region of display data displayed on the touch screen display device, in accordance with the distance.

### (Supplementary Note 7)

The information processing terminal according to any of Supplementary Notes 1 to 6, wherein the display control part is configured to change density of a display color of display data displayed on the touch screen display device, in accordance with the distance.

### (Supplementary Note 8)

The information processing terminal according to any of Supplementary Notes 1 to 7, wherein the display control part is configured to change luminance of a display color of display data displayed on the touch screen display device, in accordance with the distance.

### (Supplementary Note 9)

The information processing terminal according to any of Supplementary Notes 1 to 8, wherein the display control part is configured to display in a manner that, in accordance with an angle from the specific position detected by the position detecting means to a display position of display data on the touch screen display device with respect to a display surface of the touch screen display device, a display state of the display data changes.

### (Supplementary Note 10)

The information processing terminal according to any of Supplementary Notes 1 to 9, wherein:
the control device includes a contact detecting part configured to detect a contact input to the touch screen display device; and
the contact detecting part is configured to change a range to detect a contact input to display data in accordance with change of the display state of the display data by the display control part.

### (Supplementary Note 11)

The information processing terminal according to any of Supplementary Notes 1 to 10, wherein:
the control device includes a contact detecting part configured to detect a contact input to the touch screen display device; and
the contact detecting part is configured to change detection sensitivity to a contact input to the touch screen display device in accordance with a distance between the specific position detected by the position detecting means and a display position of display data on the touch screen display device.

### (Supplementary Note 12)

The information processing terminal according to any of Supplementary Notes 1 to 11, comprising a horizontal state detecting means for detecting that a display surface of the touch screen display device is in a horizontal state based on a previously set criterion,
wherein the display control part is configured to display in a manner that the display state of the display data changes in a case where the horizontal state detecting means detects that the touch screen display device is in the horizontal state.

### (Supplementary Note 13)

The information processing terminal according to any of Supplementary Notes 1 to 12, wherein:
the position detecting means is configured to detect a previously set specific person existing in the specific position; and
the display control part is configured to, in accordance with a distance between the position of the specific person detected by the position detecting means and a display position of display data on the touch screen display device, change a display state of the display data.

### (Supplementary Note 14)

A computer program comprising instructions for causing an information processing terminal including a touch screen display device to realize:
a position detecting means for detecting a specific position with respect to the touch screen display device; and
a display control part configured to control a display state on the touch screen display device and, in accordance with a distance between a specific position detected by the position detecting means and a display region occupied by display data on the touch screen display device, change a display state of the display data.

### (Supplementary Note 15)

The computer program according to Supplementary Note 14, wherein the display control part is configured to determine a distal position and a proximal position on the display region in a direction of the distance from the specific position to the display data, and display in a manner that a display state varies from the distal position toward the proximal position.

### (Supplementary Note 16)

A display control method by an information processing terminal including a touch screen display device, the display control method comprising:
detecting a specific position with respect to the touch screen display device; and
in accordance with a distance between a detected specific position and a display region occupied by display data on the touch screen display device, changing a display state of the display data on the touch screen display device.

### (Supplementary Note 17)

The display control method according to Supplementary Note 16, comprising determining a distal position and a proximal position on the display region in a direction of the distance from the specific position to the display data, and displaying in a manner that a display state varies from the distal position toward the proximal position.

The programs disclosed in the exemplary embodiments and the supplementary note are stored in the storage device, or recorded on a computer-readable recording medium. For example, the recording medium is a portable medium such as a flexible disk, an optical disk, a magneto-optical disk, and a semiconductor memory.

Although the present invention is described above by referring to the above exemplary embodiments, the present invention is not limited to the exemplary embodiments described above. The configurations and details of the present invention can be modified in various manners that can be understood by one skilled in the art within the scope of the present invention.

The present invention is based upon and claims the benefit of priority from Japanese patent application No. 2011-208567, filed on September 26, 2011, the disclosure of which is incorporated herein in its entirety by reference.

### DESCRIPTION OF REFERENCE NUMERALS

- 1: mobile terminal
- 10: touch screen display device
- 11: camera sensor part
- 12: proximity sensor part
- 13: 3-axis acceleration sensor
- 21: display control part
- 22: input detecting part
- 23: camera control part
- 100: information processing terminal
- 110: touch screen display device
- 120: control device
- 121: display control part
- 130: position detecting means

## Claims

1. An information processing terminal comprising:
a touch screen display device;
a control device configured to control a display state on the touch screen display device; and
a position detecting means for detecting a specific position with respect to the touch screen display device,
wherein the control device includes a display control part configured to, in accordance with a distance between a specific position detected by the position detecting means and a display region occupied by display data on the touch screen display device, change a display state of the display data.

2. The information processing terminal according to Claim 1, wherein the display control part is configured to determine a distal position and a proximal position on the display region in a direction of the distance from the specific position to the display data, and display in a manner that a display state varies from the distal position toward the proximal position.

3. The information processing terminal according to Claim 2, wherein the display control part is configured to determine the distal position and the proximal position in the direction of the distance on the display region occupied by each of a plurality of display data displayed on the touch screen display device.

4. The information processing terminal according to Claim 2 or 3, wherein the display control part is configured to display in a manner that a rate of a data size of the display data decreases from the distal position toward the proximal position, or display in a manner that the rate increases from the proximal position toward the distal position.

5. The information processing terminal according to any of Claims 1 to 4, wherein the display control part is configured to change a display region occupied by shaded display data displayed in vicinity of a display region of display data displayed on the touch screen display device, in accordance with the distance.

6. The information processing terminal according to any of Claims 1 to 5, wherein the display control part is configured to change a height of a three-dimensional display displayed in vicinity of a display region of display data displayed on the touch screen display device, in accordance with the distance.

7. The information processing terminal according to any of Claims 1 to 6, wherein the display control part is configured to change density of a display color of display data displayed on the touch screen display device, in accordance with the distance.

8. The information processing terminal according to any of Claims 1 to 7, wherein the display control part is configured to change luminance of a display color of display data displayed on the touch screen display device, in accordance with the distance.

9. The information processing terminal according to any of Claims 1 to 8, wherein the display control part is configured to display in a manner that, in accordance with an angle from the specific position detected by the position detecting means to a display position of display data on the touch screen display device with respect to a display surface of the touch screen display device, a display state of the display data changes.

10. The information processing terminal according to any of Claims 1 to 9, wherein:
the control device includes a contact detecting part configured to detect a contact input to the touch screen display device; and
the contact detecting part is configured to change a range to detect a contact input to display data in accordance with change of the display state of the display data by the display control part.

11. The information processing terminal according to any of Claims 1 to 10, wherein:
the control device includes a contact detecting part configured to detect a contact input to the touch screen display device; and
the contact detecting part is configured to change detection sensitivity to a contact input to the touch screen display device in accordance with a distance between the specific position detected by the position detecting means and a display position of display data on the touch screen display device.

12. The information processing terminal according to any of Claims 1 to 11, comprising a horizontal state detecting means for detecting that a display surface of the touch screen display device is in a horizontal state based on a previously set criterion,
wherein the display control part is configured to display in a manner that the display state of the display data changes in a case where the horizontal state detecting means detects that the touch screen display device is in the horizontal state.

13. The information processing terminal according to any of Claims 1 to 12, wherein:
the position detecting means is configured to detect a previously set specific person existing in the specific position; and
the display control part is configured to, in accordance with a distance between the position of the specific person detected by the position detecting means and a display position of display data on the touch screen display device, change a display state of the display data.

14. A computer program comprising instructions for causing an information processing terminal including a touch screen display device to realize:
a position detecting means for detecting a specific position with respect to the touch screen display device; and
a display control part configured to control a display state on the touch screen display device and, in accordance with a distance between a specific position detected by the position detecting means and a display region occupied by display data on the touch screen display device, change a display state of the display data.

15. The computer program according to Claim 14, wherein the display control part is configured to determine a distal position and a proximal position on the display region in a direction of the distance from the specific position to the display data, and display in a manner that a display state varies from the distal position toward the proximal position.

16. A display control method by an information processing terminal including a touch screen display device, the display control method comprising:
detecting a specific position with respect to the touch screen display device; and
in accordance with a distance between a detected specific position and a display region occupied by display data on the touch screen display device, changing a display state of the display data on the touch screen display device.

17. The display control method according to Claim 16, comprising determining a distal position and a proximal position on the display region in a direction of the distance from the specific position to the display data, and displaying in a manner that a display state varies from the distal position toward the proximal position.
